# EUROPÄISCHE PATENTANMELDUNG

(11) **EP 1 442 865 A1**
(43) Veröffentlichungstag der Anmeldung: **04.08.2004**
(21) Anmeldenummer: 03029155.3
(22) Anmeldetag: 18.12.2003
(51) Int. Cl.: B29C 45/84, B29C 45/17

(54) **Spritzschutzeinrichtung für ein Einspritzaggregat**

(30) Priorität: 31.01.2003 DE 10304118; 26.03.2003 DE 10318826
(71) Anmelder: Krauss-Maffei Kunststofftechnik GmbH, 80997 München (DE)
(72) Erfinder: Grimm, Günther, 86567 Hilgertshausen (DE); Staudacher, Friedrich, 82223 Eichenau (DE)
(74) Vertreter: Wilhelm, Ludwig, Dipl.-Phys.

(57) **Zusammenfassung**

Eine Spritzschutzeinrichtung (7) für das Einspritzaggregat (1) einer Spritzgießmaschine, bestehend aus einer zwischen einer Abdecklage austrittsseitig des Einspritzdüsenkanals und einer das Austrittsende des Düsenkanals freigebenden Öffnungslage umsteuerbaren Schutzplatte (8) wird erfindungsgemäß ohne Beeinträchtigung einer prozessoptimalen Düsengestaltung dadurch hochgradig funktionssicher ausgebildet, dass zur Umsteuerung der Schutzplatte ein außerhalb des Düsenkanals angeordnetes, beim Andocken des Einspritzaggregats am Formwerkzeug (4) zwischen diesem und der Schutzplatte stellkraftübertragend wirkendes mechanisches Schaltwerk (9) vorgesehen ist.

## Beschreibung

Die Erfindung bezieht sich auf eine Spritzschutzeinrichtung für das Einspritzaggregat einer Spritzgießmaschine, nach dem Oberbegriff des Patentanspruchs 1.

Um Personen, die sich im Arbeitsbereich des Einspritzaggregats einer Spritzgießmaschine befinden, gegen Verletzungen durch ausspritzende, heiße Formmasse, die im abgekoppelten Zustand des Einspritzaggregats unkontrolliert etwa aufgrund einer Gasblasenbildung oder einer thermischen Ausdehnung der Formmasse im Plastifizierzylinder oder einer Fehlsteuerung im Prozessablauf aus der Einspritzdüse austritt, zu schützen, ist es bekannt, unmittelbar vor dem Austrittsende der Einspritzdüse eine Schutzklappe anzuordnen, die mit Hilfe von pneumatischen oder hydraulischen Aktuatoren unter der Steuerung elektrischer Näherungsschalter in eine die Einspritzdüse freigebende Öffnungslage hochgeschwenkt wird, wenn das Einspritzaggregat beim Vorwärtshub eine definierte Näherungsposition am Formwerkzeug erreicht, und umgekehrt in eine die Einspritzdüse austrittsseitig abdeckende Schließlage verstellt wird, sobald das Einspritzaggregat beim Rückwärtshub die Näherungsposition verlässt. Eine derartige Schutzeinrichtung besitzt jedoch eine komplexe Bauweise und infolge der Hintereinanderschaltung unterschiedlicher Systemkomponenten, nämlich einer elektrischen Näherungsschaltung, hydraulischer oder pneumatischer Aktuatoren und einer mechanischen Schutzklappenkinematik, ein für ein Schutzsystem übermäßig hohes Störrisiko.

Das aus der JP-A-08 025 416 bekannte Einspritzaggregat enthält eine Schutzeinrichtung mit einer federbelasteten, vom Düsenkanal durchsetzten Düsenspitze, welche über einen sich durch den Düsenkanal erstreckenden Betätigungsstößel mit einem auf der Einlassseite des Düsenkanals angeordneten, unter Federkraft normalerweise geschlossenen Absperrventil gekoppelt ist. Beim Auftreffen der Düsenspitze auf den Angusstrichter des Formwerkzeugs wird diese entgegen der Federkraft zurückgeschoben und dadurch das Absperrventil aufgesteuert. Eine solche mechanische Schutzeinrichtung schafft jedoch erhebliche verfahrenstechnische Probleme: so entwickeln zahlreiche Formmassen aufgrund von Degradationserscheinungen Gaseinschlüsse im Plastifizierzylinder, die im abgekoppelten Zustand des Einspritzaggregats wegen des dann geschlossenen Absperrventils nicht ins Freie entweichen können und daher beim Einspritzvorgang zusammen mit der Formmasse in das Formwerkzeug gelangen, mit der Folge einer entsprechenden Qualitätsminderung oder gar eines Bauteilausschusses der produzierten Spritzgussteile. Problematisch an der einlassseitigen Absperrung des Düsenkanals ist weiterhin, dass die nach dem Schussende im Düsenkanal verbliebene Formmasse aufgrund der Schließlage des Absperrventils nicht durch aus dem Plastifizierzylinder nachgedrückte Formmasse beseitigt werden und sich daher zu einem Verschlusspfropfen verfestigen kann, welcher beim nächsten Schuss mit ebenfalls qualitätsmindernden Folgen für das hergestellte Bauteil in die Formkavität gelangen oder gar die Ventilbetätigung blockieren kann.

Aufgabe der Erfindung ist es, eine Spritzschutzeinrichtung der eingangs genannten Art zu schaffen, die ohne Beeinträchtigung des Spritzgießprozesses und insbesondere der Düsenkanalgeometrie hochgradig störsicher ausgebildet ist.

Diese Aufgabe wird erfindungsgemäß durch die im Patentanspruch 1 gekennzeichnete Spritzschutzeinrichtung gelöst.

Die erfindungsgemäße Schutzeinrichtung ist als fremdkraftunabhängiges, rein mechanisches System aus wenigen, vollständig außerhalb der Einspritzdüse angeordneten Einzelteilen ausgebildet und arbeitet demzufolge hochgradig störsicher und unabhängig von der Gestaltung des Düsenkanals. Das Strömungsverhalten der Einspritzdüse und insbesondere der Querschnittsverlauf des Düsenkanals können daher ohne Rücksicht auf den Einbau der Schutzeinrichtung prozessoptimal gewählt werden. Die erfindungsgemäße Schutzeinrichtung ist universell einsetzbar und ermöglicht ein nachträgliches Ausrüsten von Einspritzaggregaten praktisch beliebiger Düsenbauart.

Um das Nachrüsten mit der erfindungsgemäßen Schutzeinrichtung zu erleichtern und den mit dem Schaltwerk beim Andocken des Einspritzaggregats zusammenwirkenden Flächenabschnitt des Formwerkzeugs in bestimmten Grenzen frei vorwählen zu können, ist die Schutzplatte zusammen mit dem Schaltwerk vorzugsweise auf einem drehpositionierbar auf dem Einspritzaggregat montierbaren Träger angeordnet. Eine kinematisch besonders günstige Gestaltung des Schaltwerks wird dadurch erreicht, dass dieses einen gleichzeitig mit dem Andockvorgang auf eine werkzeugfeste Anschlagfläche außerhalb der Angussöffnung des Formwerkzeugs auftreffenden und durch diese entgegen der Vorschubbewegung des Einspritzaggregats linear verstellten Tastfinger enthält. Es sind aber beliebige andere, rein mechanisch betätigbare Ausgestaltungen des Schaltwerks denkbar, beispielsweise kann eine mit einem Ritzel zusammenwirkende Zahnstange anstelle des Tastfingers eingesetzt werden.

Die Schutzplatte und das Schaltwerk sind vorzugsweise sich selbsttätig in die Abdecklage verstellend ausgebildet, derart, dass das Schaltwerk federnd in die Abdecklage vorgespannt ist, wodurch die Schaltsicherheit der erfindungsgemäßen Schutzeinrichtung weiter verbessert wird. In einer anderen Ausgestaltungsform wirkt die Schwerkraft rückstellend, beispielsweise durch ein an der Schutzplatte angebrachtes Gewicht, das diese in die Abdecklage zwingt, wenn keine anderweitige Kraft auf das Schaltwerk wirkt.

Im Hinblick auf eine einfache Bewegungssteuerung der Schutzplatte bei zugleich hoher Spritzschutzwirkung ist die Schutzplatte in Austrittsrichtung der Einspritzdüse vorzugsweise konvex gewölbt und schwenkbeweglich am Einspritzaggregat angeordnet. Ferner ist der Schaltpunkt des Schaltwerks aus Gründen eines feinfühligen Ansprechverhaltens vorzugsweise variabel einstellbar, und zur Überwachung der Schaltlage sind der Schutzplatte Positionsgeber zugeordnet.

Die Erfindung wird nunmehr anhand eines in den Fig. schematisch dargestellten Ausführungsbeispiels näher erläutert. Es zeigen:
- **Fig. 1**: ein Einspritzaggregat für eine Spritzgießmaschine im Bereich des düsenseitigen Endes mit einer Spritzschutzeinrichtung nach der Erfindung; und
- **Fig. 2**: die Vorderansicht der Spritzschutzeinrichtung und des Einspritzaggregats nach Fig. 1.

Das in den Fig. gezeigte Einspritzaggregat 1 einer ansonsten nicht näher gezeigten Spritzgießmaschine enthält einen in Pfeilrichtung P linear verschieblichen Plastifizierzylinder 2 (von dem nur der einspritzseitige Endabschnitt dargestellt ist) und eine an diesen anschließende, von einem Einspritzkanal durchsetzte Einspritzdüse 3, die beim Andocken des Einspritzaggregats 1 an ein Formwerkzeug 4 mit der Düsenspitze 5 in eine zu dieser formgleiche Angussöffnung 6 des Formwerkzeugs 4 eingreift, woraufhin die Formmasse aus dem Plastifizierzylinder 2 über den Einspritzkanal in das Formwerkzeug 4 eingespritzt wird.

Um zu verhindern, dass in der Rückhubstellung, in die das Einspritzaggregat 1 nach Schussende verfahren wird, aufgrund von Degradationserscheinungen, etwa einer störenden Gasblasenbildung oder einer thermischen Volumenvergrößerung der Formmasse im Plastifizierzylinder 2, oder aufgrund einer Fehlsteuerung im Prozessablauf heiße Formmasse aus der Einspritzdüse 3 unkontrolliert ins Freie ausspritzt, ist der Einspritzdüse 3 eine insgesamt mit 7 bezeichnete Spritzschutzeinrichtung zugeordnet. Diese enthält eine konvexe, etwa kreisbogenförmige Schutzplatte 8, welche um eine zur zentralen Achse A-A des Einspritzaggregats senkrechte Drehachse D zwischen einer - in den Fig. gezeigten - Abdecklage unmittelbar austrittsseitig des Einspritzdüsenkanals und einer den Düsenkanal freigebenden Öffnungslage verschwenkbar am Einspritzaggregat 1 montiert ist. Zur Umsteuerung der Schutzplatte 8 zwischen diesen beiden Endlagen dient ein insgesamt mit 9 bezeichnetes, rein mechanisches Schaltwerk. Dieses enthält einen Tastfinger 10, welcher in einer Führungshülse 11 parallel versetzt zur zentralen Düsenachse A-A verschieblich angeordnet und über eine Langlochverbindung 12 mit dem freien Hebelende des Schutzplatten-Schwenkhebels 13 verkoppelt ist. Durch eine Druckfeder 14 ist das Schaltwerk 9 in die Abdecklage der Schutzplatte 8 vorgespannt. Beim Andocken des Einspritzaggregats 1 trifft der Tastfinger 10 auf eine werkzeugfeste Anschlagfläche 15 außerhalb der Angussöffnung 6 und wird dadurch in der Führungshülse 11 entgegen der Federkraft axial verschoben, so dass die Schutzplatte 8 hochgeschwenkt wird und am Ende des Andockvorgangs in die volle Öffnungslage umgesteuert ist. Sobald sich das Einspritzaggregat 1 vom Formwerkzeug 4 entfernt, wird die Schutzplatte 8 unter Federkraft erneut in die Abdecklage zurückgeschwenkt.

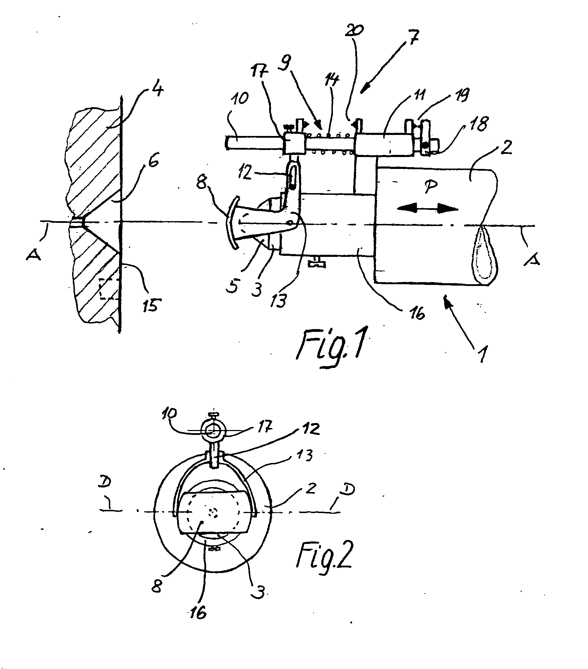

Das Schaltwerk 9 ist zusammen mit der Schutzplatte 8 auf einem Träger 16 angeordnet, so dass die gesamte Schutzeinrichtung 7 als Baueinheit auch nachträglich an einem Einspritzaggregat 1 montiert werden kann. Zusätzlich ist der Träger 16 und damit die gesamte Schutzeinrichtung 7 drehpositionierbar am Einspritzaggregat 1 befestigt und die wirksame Länge des Tastfingers 10 zwischen dem vorderen Tastfingerende und der Langlochverbindung 12 und folglich der Schaltpunkt der Schutzeinrichtung 7 durch ein längenverstellbares Schaltstück 17 und einen Anschlag 18 veränderlich einstellbar, um unterschiedliche Geometrien, insbesondere Bauhöhen der Einspritzdüse 3 oder der Werkzeugfläche 15 ausgleichen zu können. So kann der Tastfinger 10 problemlos etwa auch auf eine werkzeugseitige - in Fig. 1 gestrichelt dargestellte - Freifläche als Anschlagfläche einjustiert werden.

Zur Überwachung der Schaltposition der Schutzplatte 8 können Positionsgeber 19, 20, etwa in Form von elektrischen Schaltkontakten, zwischen der Führungshülse 11 und dem Schaltstück 17 bzw. dem Anschlag 18 vorgesehen sein.

Die beschriebene Schutzeinrichtung ist für alle Anwendungen, und zwar auch für Fertigungsprozesse mit anliegender Einspritzdüse, d.h. universell einsetzbar und bietet ein einheitliches Sicherheitsniveau, auch für Einspritzaggregate mit nadelventilgesteuerten Einspritzdüsen, bei denen dann die Notwendigkeit entfällt, das Nadelventil aus Sicherheitsgründen aktiv zuzuhalten, wenn und sobald das Einspritzaggregat 1 vom Formwerkzeug 4 abgekoppelt ist.

## Patentansprüche

1. Spritzschutzeinrichtung für das Einspritzaggregat einer Spritzgießmaschine, bestehend aus einer zwischen einer Abdecklage austrittsseitig des Einspritzdüsenkanals und einer das Austrittsende des Düsenkanals freigebenden Öffnungslage umsteuerbaren Schutzplatte, **dadurch gekennzeichnet, dass**
zur Umsteuerung der Schutzplatte (8) ein außerhalb des Düsenkanals angeordnetes, beim Andocken des Einspritzaggregats (1) am Formwerkzeug (4) zwischen diesem und der Schutzplatte stellkraftübertragend wirkendes mechanisches Schaltwerk (9) vorgesehen ist.

2. Spritzschutzeinrichtung nach Anspruch 1, **dadurch gekennzeichnet, dass**
die Schutzplatte (8) zusammen mit dem Schaltwerk (9) auf einem drehpositionierbar auf dem Einspritzaggregat (1) montierten Träger (16) angeordnet ist.

3. Spritzschutzeinrichtung nach Anspruch 1 oder 2, **dadurch gekennzeichnet, dass**
das Schaltwerk (9) einen gleichzeitig mit dem Andockvorgang auf eine werkzeugfeste Anschlagfläche (15) außerhalb der Angussöffnung (6) des Formwerkzeugs (4) auftreffenden und durch diese entgegen der Vorschubbewegung des Einspritzaggregats (1) linear verstellbaren Tastfinger (10) enthält.

4. Spritzschutzeinrichtung nach einem der vorhergehenden Ansprüche, **dadurch gekennzeichnet, dass**
die Schutzplatte (8) und das Schaltwerk (9) sich selbsttätig in die Abdecklage verstellend ausgebildet sind.

5. Spritzschutzeinrichtung nach Anspruch 4, **dadurch gekennzeichnet, dass**
das Schaltwerk (9) federnd in die Abdecklage vorgespannt ist.

6. Spritzschutzeinrichtung nach einem der vorhergehenden Ansprüche, **dadurch gekennzeichnet, dass**
die Schutzplatte (8) im Wesentlichen kreisbogenförmig gestaltet und um den Kreismittelpunkt schwenkbeweglich am Einspritzaggregat (1) angeordnet ist.

7. Spritzschutzeinrichtung nach einem der vorhergehenden Ansprüche, **dadurch gekennzeichnet, dass**
der Schaltpunkt des Schaltwerks (9) einstellbar ist.

8. Spritzschutzeinrichtung nach einem der vorhergehenden Ansprüche, **gekennzeichnet durch**
Positionsgeber (19, 20) zur Überwachung der Schaltlage der Schutzplatte (8).
